# FASCICULE DE BREVET EUROPEEN

(11) **EP 3 496 974 B1**
(45) Date de publication et mention de la délivrance du brevet: **07.10.2020**
(21) Numéro de dépôt: 17758586.6
(22) Date de dépôt: 25.07.2017
(51) Int. Cl.: B60N 3/00, B60R 7/04, B60N 2/015, B60N 2/07, B60N 2/08

(54) **ENSEMBLE COULISSANT POUR HABITACLE DE VEHICULE AUTOMOBILE A CONFORT D'UTILISATION AMELIORE**
VERSCHIEBBARE VORRICHTUNG FÜR KRAFTFAHRZEUGINNENRAUM MIT VERBVESSERTEN GEBRAUCHSKOMFORT
SLIDEABLE SYSTEM FOR AUTOMOTIVE VEHICLE INTERIOR WITH IMPROVED USAGE COMFORT

(30) Priorité: 11.08.2016 FR 1657721
(43) Date de publication de la demande: 19.06.2019
(73) Titulaire: PSA Automobiles SA, 78300 Poissy (FR)
(72) Inventeur: BALLANDRAS, Philippe, 25700 VALENTIGNEY (FR); DALVERNY, Nicolas, 25630 SAINTE SUZANNE (FR); LOUBATIE, Pascal, 94800 VILLEJUIF (FR)
(86) Numéro de dépôt international: PCT/FR2017/052052
(87) Numéro de publication internationale: WO 2018/029410

(56) Documents cités:
- EP-A1- 0 947 380
- EP-A1- 0 949 111
- FR-A1- 2 762 811
- FR-A1- 2 762 815

## Description

### Domaine de l'invention

La présente invention concerne l'agencement de l'habitacle des véhicules automobiles de type monospace ou utilitaires, qui comportent plusieurs rangées de sièges latéraux agencés symétriquement de part et d'autre de l'axe longitudinal médian du véhicule.

L'invention vise en particulier un ensemble coulissant pour habitacle de véhicule automobile comportant une glissière profilée destinée à être solidarisée au plancher dudit véhicule ainsi qu'une console prévue pour être montée à coulissement de manière amovible sur cette glissière.

### Arrière-plan de l'invention

Ces consoles coulissantes, servant notamment de rangement et de support, sont implantées essentiellement dans les véhicules de type monospace à habitacle modulable et les véhicules utilitaires de type fourgon dédiés au transport de passagers.

La demande de brevet EP 1 245 446 divulgue un ensemble comportant une telle console ainsi qu'une glissière de guidage s'étendant selon une direction longitudinale du véhicule.

La glissière est constituée par un profilé à section en U comprenant une base horizontale et deux ailes verticales dotées à leurs extrémités libres de deux rebords horizontaux respectifs tourné vers l'intérieur du U et délimitant entre eux une fente s'étendant également suivant une direction longitudinale.

Cette fente comprend une zone de coulissement et une zone d'extraction de plus grande largeur.

La console est montée à coulissement et de manière amovible sur la glissière par l'intermédiaire de moyens de guidage et de retenue comprenant une tige verticale montée mobile sur la console en rotation autour de son axe perpendiculaire à la direction de coulissement et sur l'extrémité inférieure de laquelle est fixé un pêne s'étendant horizontalement de part et d'autre de ladite tige.

Le pêne est sensiblement rectangulaire et présente une longueur supérieure à la largeur de la fente, y compris dans sa zone extraction.

Lorsque ce pêne est agencé en configuration de retenue, transversalement à la direction longitudinale de la glissière, celui-ci demeure maintenu à l'intérieur de la glissière qu'elle que soit sa position le long de cette glissière.

La largeur du pêne est comprise entre la largeur de la fente dans la zone de coulissement et celle de cette même fente dans la zone extraction.

Lorsque ce pêne est agencé en configuration d'extraction suivant la direction longitudinale de la glissière et que la console est déplacée vers une position où il est disposé en regard de la zone d'extraction de la fente, celui-ci peut passer à travers la glissière de sorte que la console peut être extraite.

La demande de brevet EP 0 949111 divulgue un système pour le réglage et le blocage de la position longitudinale d'une console dans un habitacle d'un véhicule équipé de glissières qui reçoit un système de verrouillage longitudinal et vertical de la console, dont l'extrémité reçue dans la glissière est équipée d'un mécanisme expansible mobile comportant des organes de verrouillage commandés par des déplacements verticaux de coulisseaux entre trois positions, d'engagement ou dégagement vertical, de réglage, et de verrouillage

A l'usage, ces moyens de guidage et de retenue ne permettent toutefois pas d'assurer une stabilité satisfaisante de la console par rapport au plancher.

Ainsi, lorsqu'elle est soumise en phase de virage à des efforts transversaux, la console à tendance à pivoter légèrement autour de son axe de coulissement longitudinal ce qui impacte négativement le niveau de qualité perçue par les usagers.

Ce mouvement vibratoire s'avère également particulièrement gênant lorsque la console est de type convertible en table support car cette dernière s'avère instable (ses extrémités latérales pouvant subir des débattements verticaux de plusieurs centimètres).

En outre, le fait de devoir déplacer la console dans un positionnement particulier pour pourvoir l'extraire s'avère particulièrement pénible pour les usagers.

### Objet et résumé de l'invention

La présente invention vise donc à palier à ces inconvénients.

Elle propose à cet effet un ensemble coulissant pour habitacle de véhicule automobile comportant :
- une glissière profilée à section en U destinée à être solidarisée au plancher dudit véhicule et comprenant une base horizontale et deux ailes latérales dotées à leurs extrémités libres de deux rebords internes respectifs en regard l'un de l'autre, et
- une console prévue pour être montée à coulissement de manière amovible sur ladite glissière ;
- ladite console comporte en outre un dispositif de verrouillage comprenant deux mors montés pivotants autour d'un même axe longitudinal et aptes à être déplacés par des moyens de commande entre une position écartée, et une position rapprochée dans laquelle ils sont contenus entre lesdits rebords internes de sorte à ne pas interférer avec ladite glissière lors de la mise en place de la dite console sur cette glissière ou lors de son extraction, caractérisé en ce que dans leur position écartée les mors ont leurs extrémités inférieures en forme de bec, les dits mors étant respectivement en prise avec les faces inférieures des deux rebords internes de ladite glissière (10).

De par la cinématique en rotation de ses deux mors coopérant avec les faces inférieures des deux rebords internes des ailes latérales de la glissière, le dispositif de verrouillage permet d'assurer un serrage vertical sans jeu entre la console et la glissière.

La console présente ainsi en toutes circonstances une excellente stabilité par rapport au plancher ce qui est particulièrement appréciable lorsque cette dernière est de type convertible en table support.

Cette cinématique particulière du dispositif de verrouillage facilite en outre grandement la mise en place ou l'extraction de la console qui peut s'effectuer dans n'importe quelle position longitudinale de cette dernière vis-à-vis de la glissière.

Selon des caractéristiques préférées dudit ensemble, prises seules ou en combinaison :
- lesdits moyens de commande comportent des premiers moyens de rappel élastiques sollicitant en permanence lesdits mors vers ladite position rapprochée, ainsi qu'une came montée coulissante selon une pente longitudinale inclinée au travers d'un corps creux, ladite came présentant une face inférieure sensiblement horizontale en appui sur les extrémités supérieures desdits mors et dont la hauteur varie en fonction de la position longitudinale de ladite came de sorte à entrainer une modification de l'écartement angulaire entre lesdits mors ;
- ladite console comporte une poignée d'actionnement reliée à ladite came et pouvant être soulevée à pivotement par un usager depuis une position basse dans laquelle ladite came occupe une position reculée basse où elle contraint lesdits mors dans leur position écartée à l'encontre desdits premiers moyens de rappel élastiques, et vers une position haute dans laquelle ladite came vient occuper une position avancée haute où elle ne contraint plus lesdits mors qui sont donc amenés par lesdits premiers moyens de rappel élastiques dans leur position rapprochée ;
- ladite poignée est systématiquement rappelée vers la position basse par des deuxièmes moyens de rappel élastiques ;
- ledit dispositif de verrouillage comporte un organe de blocage monté pivotant autour d'un deuxième axe longitudinal, ainsi que des troisièmes moyens de rappel élastiques aptes à entrainer, lors du soulèvement à pivotement de ladite poignée en position haute, ledit organe de blocage vers une position dans laquelle il forme une butée pour l'extrémité arrière de ladite tirette de sorte à empêcher le retour automatique desdits mors en position écartée et celui de la poignée en position basse dès que cette dernière est relâchée ;
- ledit organe de blocage est agencé de sorte à être contraint, lors de la mise en place de ladite console sur ladite glissière, par l'une des ailes latérales de cette glissière de pivoter à l'encontre desdits troisièmes moyens de rappel élastiques afin d'entrainer le retour automatique desdits mors en position écartée et celui de ladite poignée en position basse ;
- ladite console comporte au moins une empreinte de préhension ménagée à l'opposée de la dite poignée de sorte à permettre à un usager de soulever ladite console en insérant une première main dans ladite poignée et la seconde dans ladite empreinte ;
- ladite glissière présente une pluralité de fenêtres ménagées le long d'au moins l'une de ses deux ailes latérales, ledit dispositif de verrouillage comportant également un balancier monté pivotant autour d'un troisième axe longitudinal et muni d'un crochet à son extrémité inférieure, ledit balancier étant apte à être déplacé entre une position saillante dans laquelle ledit crochet traverse l'une des dites fenêtres de sorte à verrouiller longitudinalement ladite console sur ladite glissière, et une position effacée dans laquelle ledit crochet est contenu entre lesdits rebords internes de sorte à ne pas interagir avec ladite glissière ;
- ledit balancier est en outre sollicité en permanence vers ladite position saillante par des quatrièmes moyens de rappel élastiques, et en ce que ladite came est prolongée à son extrémité arrière par une tirette agencée de sorte à contraindre ledit balancier à se déplacer à l'encontre desdits quatrièmes moyens de rappel élastiques vers ladite position effacée lorsque ladite poignée est soulevée à pivotement dans sa position haute ; et/ou
- ladite console comporte en outre au moins un rail de guidage destiné à s'insérer avec un faible jeu entre lesdites ailes latérales de la glissière.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente une vue en perspective de trois quart avant d'un ensemble selon l'invention comportant une console montée coulissante le long d'une glissière de guidage fixée au plancher d'un véhicule automobile, ladite console étant montrée sans sa configuration escamotée ;
- la figure 2 est une vue en perspective de trois quart avant de la console de la figure 1 en configuration de service ;
- la figure 3 représente une vue en coupe de la console en configuration escamotée prise selon son plan longitudinal médian ;
- la figure 4 est une vue éclatée en perspective du dispositif de verrouillage que comporte la console ;
- la figure 5 représente une vue de côté du dispositif de verrouillage dans sa configuration verrouillée permettant de fixer rigidement la console sur la glissière ;
- la figure 6 est une vue partielle en perspective de trois quart arrière du dispositif de verrouillage dans cette configuration verrouillée ;
- la figure 7 représente une vue de dos du dispositif de verrouillage et de la glissière en configuration verrouillée ;
- la figure 8 est une vue en coupe transversale du dispositif de verrouillage prise selon le plan VIII-VIII de la figure 5 ;
- la figure 9 représente une vue en section du système de verrouillage prise selon le plan IX-IX de la figure 5 ; et
- les figures 10 à 14 sont des vues semblables à celles des figures 6 à 9 mais sur lesquelles le dispositif de verrouillage est montré dans sa configuration déverrouillée permettant la mise en place de la console sur la glissière.

### Description détaillée d'un mode de réalisation préféré

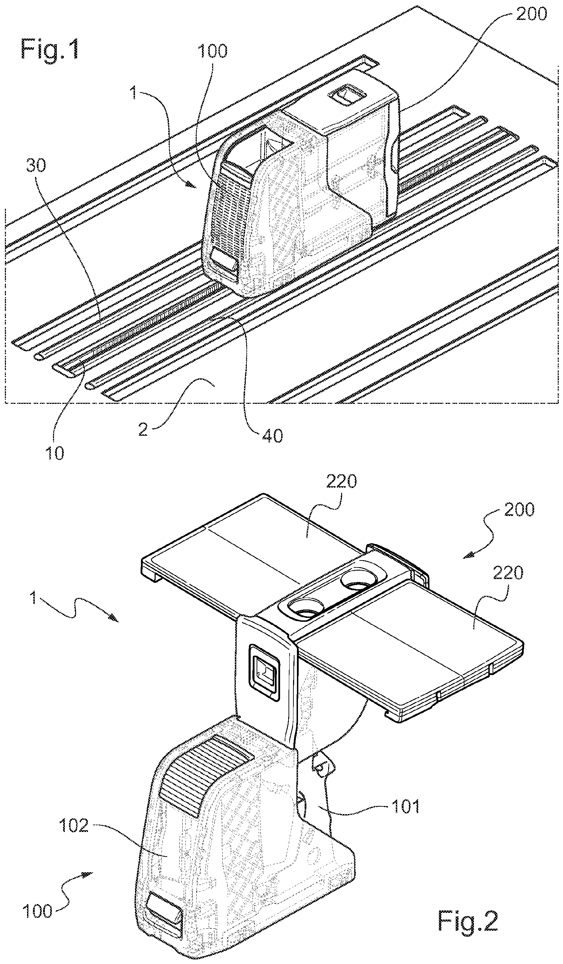

L'ensemble représenté sur la figure 1 comporte une console 1 montée coulissante le long d'une glissière de guidage 10 fixée au plancher 2 du véhicule.

Par convention, les termes « avant », « arrière », « longitudinal » et « transversal » sont définis par rapport à la position de montage de cette console 1 dans l'habitacle du véhicule.

La glissière 10, entièrement intégrée noyée dans le plancher 2, s'étend suivant une direction longitudinale du véhicule.

Elle est constituée par un profilé métallique à section en U comprenant une base horizontale 11 et deux ailes latérales verticales 12, 13 dotées à leurs extrémités libres de deux rebords internes respectifs 14, 15 en regard l'un de l'autre et délimitant entre eux une fente d'insertion 16 s'étendant également suivant une direction longitudinale.

La face inférieure de chaque rebord interne 14, 15 présente un profil s'inclinant légèrement vers le bas depuis l'aile latérale correspondante de sorte à constituer une rainure respective 18, 19.

Les deux ailes latérales 12, 13 sont également pourvues à leurs extrémités libres, de deux rebords externes respectifs 20, 21 s'étendant à l'opposé l'un de l'autre et destinés à reposer contre le tapis de plancher du véhicule.

Des fenêtres rectangulaires de verrouillage 22 sont en outre ménagées le long de ces deux ailes latérales 12, 13 en étant espacées de manière régulière et en se faisant face deux à deux.

La console 1 est constituée d'un caisson support 100 ainsi que d'un caisson table 200 articulé à pivotement sur ce caisson support de rangement 100 et sur lequel sont montés mobiles deux plateaux 220.

La console est agencée de sorte à pouvoir passer :
- d'une configuration escamotée dans laquelle le caisson table 200 s'étend dans le prolongement arrière dudit caisson support 100, tandis que les panneaux 220 sont reçus verticalement dans deux logements latéraux verticaux 222 ménagés de part et d'autre du caisson table 200 (figure 1) ;
- à une configuration de service dans laquelle le caisson table 200 a pivoté de 90° vers le haut pour venir s'étendre au dessus et à l'arrière du caisson support 100, tandis que les panneaux 220 s'étendent à l'horizontale de part et d'autre du caisson table 200 de sorte à former une table (figure 2).

Le caisson support 100 comporte une structure interne 101 recouverte d'un habillage externe 102.

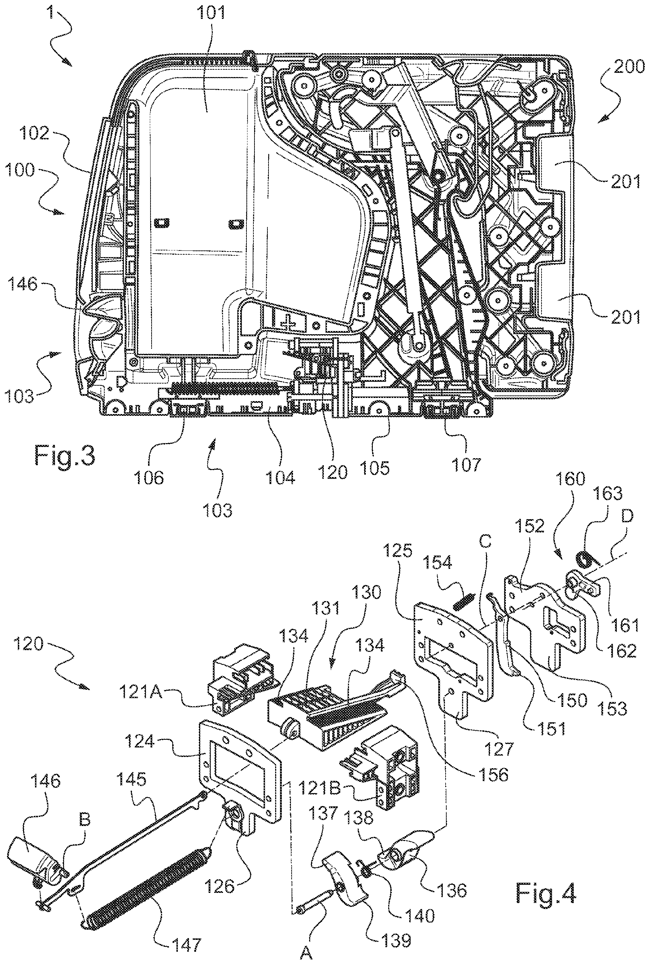

La structure interne 101 comprend en partie inférieure un châssis 103 comprenant deux rails de guidage avant 104 et arrière 105 s'étendant l'un derrière l'autre suivant une même direction longitudinale et aptes à s'insérer avec un faible jeu entre les ailes latérales 12, 13 de la glissière 10 de sorte à permettre le coulissement de la console 1 le long de la glissière 10 (figure 3).

Le châssis 103 comprend également deux paires avant et arrière de pieds 106, 107 s'étendant transversalement de part et d'autre respectivement du rail avant 104 et du rail arrière 105.

Les parois inférieures de ces quatre pieds 106, 107 forment des patins de glissement destinés à coulisser à glissement sur deux pistes parallèles 30, 40 ménagées symétriquement de part et d'autre de la glissière 10 dans le plancher 2 du véhicule (figure 1).

Comme illustré sur la figure 3, un dispositif de verrouillage 120 est implanté en partie inférieure de la structure interne 101 du caisson 100.

Représenté seul sur les figures 4, 5 et 10, ce dispositif 120 comporte un corps rigide creux 121 disposé entre les deux rails 104, 105 et formé par deux demi coques plastiques 121A, 121B associées et prises en sandwich entre deux plaques métalliques transversales avant 124 et intermédiaire 125.

Chaque plaque métallique 124, 125 est prolongée vers le bas par une patte de guidage rectangulaire respective 126, 127 centrée sur l'axe longitudinal des rails de guidage 104, 105 et apte à s'insérer avec un faible jeu entre les ailes latérales 12, 13 de la glissière 10.

Une came 130 présentant un profil triangulaire est montée coulissante selon une pente inclinée au travers du corps 121, par l'intermédiaire d'un profilé 131 saillant de sa face supérieure inclinée et coopérant avec une rainure complémentaire ménagée dans le corps 121.

La face supérieure inclinée de la came 130 est en outre pourvue de part et d'autre du profilé 131 de micro-nervures transversales 134 aptes à coopérer avec des micro-rainures (non visibles) ménagées sur la face interne du corps creux 121 afin d'éviter tout coulissement intempestif de cette came 130 du fait des vibrations générées par le véhicule.

Le dispositif de verrouillage 120 comporte également deux mors 136, 137 en forme de virgule implantés en dessous de la face inférieure horizontale de la came 130 et montés pivotants l'un derrière l'autre autour d'un axe longitudinal A s'étendant entre les pattes de guidage inférieures 126, 127.

L'extrémité supérieure de chaque mors 136, 137 est en appui sur la face inférieure sensiblement horizontale de la came 130 dont la hauteur varie en fonction la position longitudinale de cette came.

L'extrémité inférieure de chaque mors 136, 137 forme un bec 138, 139 destiné à coopérer avec la face inférieure d'un rebord interne correspondant 14, 15 de la glissière 10.

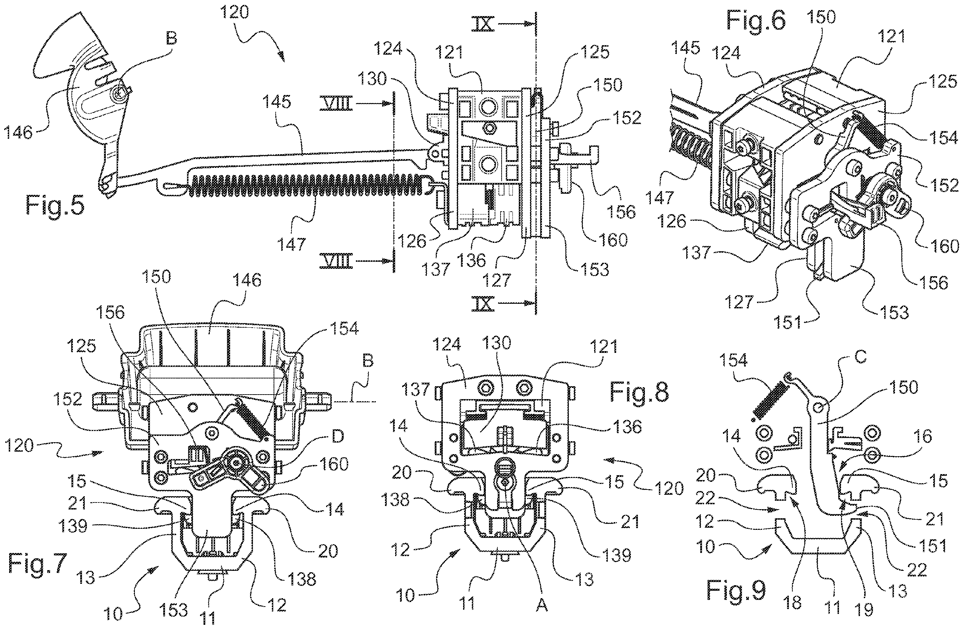

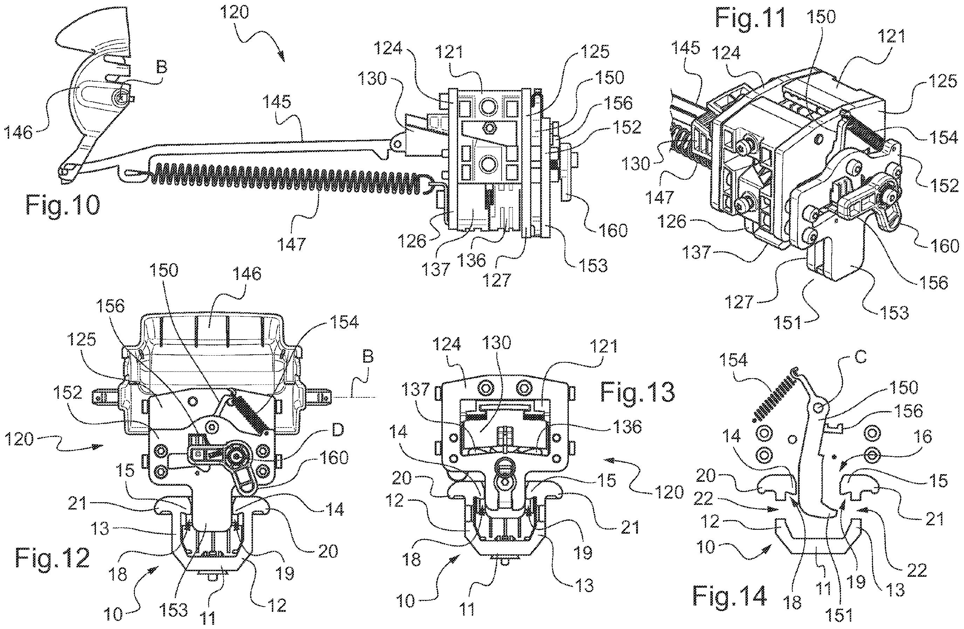

Les deux mors 136, 137 sont aptes à se déplacer entre une position écartée dans laquelle leurs becs respectifs 138, 139 saillent latéralement des pattes de guidage 126, 127 et sont engagés dans les rainures correspondantes 18, 19 des deux rebords internes 14, 15 de la glissière 10 de sorte à assurer un serrage vertical sans jeu entre la console 1 et cette glissière 10 (figures 7 et 8), et une position rapprochée dans laquelle ces becs 138, 139 sont contenus entre les rebords internes 14, 15 de sorte à ne pas interférer avec cette glissière 10 lors de l'introduction ou de l'extraction de la console 1 (figures 12 et 13).

Le corps 121 loge en outre un ressort de torsion 140 de type pince à linge comportant une portion hélicoïdale montée sur la tige entre les deux mors 136, 137, ainsi que deux branches radiales espacées angulairement et s'étendant aux deux extrémités de cette portion hélicoïdale 141 en étant rattachées respectivement à l'un et à l'autre des deux mors 136, 137.

Ce ressort 140 est agencé de sorte à solliciter en permanence les deux mors 136, 137 vers leur position rapprochée.

L'extrémité avant de la came 130 saillant du corps 121 est reliée par l'intermédiaire d'un bras articulé 145 à une poignée 146 montée à pivotement autour d'un axe transversal B en partie avant de la structure interne 101 du caisson support 100 et accessible aux usagers via une découpe 103 ménagée dans l'habillage externe 102.

Cette poignée 146 peut être soulevée à pivotement par un usager depuis une position basse (figure 5) dans laquelle la came 130 poussée par le bras 145 dans sa position arrière basse contraint les deux mors 136, 137 dans leur position écartée à l'encontre du ressort 140, et vers une position haute (figure 10) dans laquelle la came 130 tirée par le bras 145 dans sa position avancée haute ne contraint plus les deux mors 136, 137 qui sont donc amenés par le ressort 140 dans leur position rapprochée.

La poignée 146 est en outre systématiquement rappelée vers sa position basse par un ressort hélicoïdal 147 dont les deux extrémités sont fixées respectivement sur le bras 145 et sur la plaque métallique avant 124 du corps creux 121.

Le dispositif de verrouillage 120 comporte également un balancier 150 muni d'un crochet 151 à son extrémité inférieure, ce balancier 150 étant monté pivotant autour d'un axe longitudinal C entre la plaque métallique intermédiaire 125 et une troisième plaque métallique arrière transversale 152 également prolongée par une patte de guidage rectangulaire 153 centrée sur l'axe longitudinal des rails de guidage 104, 105 et s'insérant avec un faible jeu entre les ailes latérales 12, 13 de la glissière 10.

Le balancier 150 est apte à se déplacer entre une position saillante dans laquelle son crochet 151 saille latéralement des pattes de guidage 126, 127, 153 et traverse l'une des fenêtres 22 ménagées le long de l'aile latérale 13 de la glissière 10 de sorte à verrouiller longitudinalement la console 1 sur cette glissière 10 (figure 9), et une position effacée dans laquelle ce crochet 151 est contenu entre les rebords internes 14, 15 de sorte à ne pas interagir avec la glissière 10 (figure 14).

Ce balancier 150 est en outre sollicité en permanence vers sa position saillante par un ressort hélicoïdal 154 dont les deux extrémités sont fixées respectivement sur son extrémité supérieure et sur la plaque métallique arrière 152.

Comme illustré plus particulièrement par les figures 5, 6, 10 et 11, la came 130 est en outre prolongée à son extrémité arrière par une tirette longitudinale 156 traversant les plaques transversales intermédiaire 125 et arrière 152, et dont la largeur augmente progressivement de l'avant vers l'arrière.

Cette tirette 156 est ainsi agencée de sorte à contraindre le balancier 150 à se déplacer à l'encontre du ressort 154 vers sa position effacée lorsque la poignée 146 est soulevée à pivotement par un usager dans sa position haute (figure 14).

Ainsi, dans cette position de la poignée 146 correspondant aux figures 10 à 14, ni les mors 136, 137 ni le balancier 150 ne saillent latéralement des pattes de guidage 126, 127, 153.

Le dispositif de verrouillage 120 occupe alors sa configuration déverrouillée dans laquelle la console 1 peut être mise en place par un usager sur la glissière 10 sans aucune contrainte de positionnement longitudinal.

Afin d'éviter que cet usager n'ait à maintenir manuellement la poignée 146 dans la position haute pendant la mise en place de la console 1 sur la glissière 10, le dispositif de verrouillage 120 comporte un organe de blocage 160 monté pivotant autour d'un axe longitudinal D sur la face arrière de la plaque métallique transversale arrière 152 et comprenant deux doigts radiaux 161, 162 espacés angulairement d'un angle légèrement obtus.

Un ressort hélicoïdal de torsion 163 agencé entre cette plaque arrière 152 et l'organe de blocage 160 est apte à entrainer, au moment du soulèvement à pivotement par l'usager de la poignée 146 en position haute, cet organe de blocage 160 vers une position dans laquelle son premier doigt 161 forme une butée pour l'extrémité libre arrière de la tirette 156 de sorte à empêcher le retour automatique des mors 136, 137 en position écartée et celui de la poignée 146 en position basse dès que cette dernière est relâchée, tandis que son second doigt 162 saille en dessous de la plaque métallique arrière 152 en étant décalée latéralement vis-à-vis de la patte de guidage 153 (figure 11).

Lors de la mise en place de la console 1 sur la glissière 10 et juste avant que les pattes de guidages 126, 127, 153 n'atteignent leur niveau d'insertion maximal, l'extrémité inférieure libre du second doigt 162 vient au contact du rebord externe 21 de l'une 13 des deux ailes latérales 12, 13 de la glissière 10 (figure 12), ce qui provoque la rotation de l'organe de blocage 160 à l'encontre du ressort 163 et donc la libération de la tirette 156, de sorte à entrainer le retour automatique de la came 130 en position reculée basse et donc celui des mors 136, 137 en position écartée ainsi que celui de la poignée 146 en position basse (figures 6 et 7).

Le balancier 150 n'étant plus contraint par la tirette 156, est sollicité vers sa position saillante par le ressort 154 qu'il vient occuper instantanément si son crochet 151 se trouve en regard de l'une des fenêtres 22 ménagées le long de l'aile latérale 13 de la glissière 10.

Dans le cas contraire, le passage du balancier 150 vers cette position saillante (et donc le verrouillage longitudinal de la console 1) interviendra automatiquement lors d'un léger glissement longitudinal de la console 1 provoqué par exemple par l'appui du conducteur sur la pédale de frein du véhicule.

Dès lors, le dispositif de verrouillage occupera sa configuration verrouillée dans laquelle la console 1 est fixée rigidement à la glissière 10.

Afin d'améliorer sa prise en mains, la console 1 comporte des moyens de préhension constitués par des empreintes cylindriques 201 ménagées à l'opposée de la poignée 146 sur la tranche externe du caisson table 200 constituant la face arrière de la console 1 lorsque cette dernière occupe sa configuration escamotée (figure 3).

On remarquera à l'appui de la figure 2 que ces empreintes 201 présentent une double fonction puisqu'elles servent également de porte-gobelets lorsque la console 1 vient occuper sa configuration de service.

En pratique, le soulèvement de la console 1 pourra être effectué aisément par l'usager en insérant une première main dans la poignée 146 et la seconde dans l'une des empreintes 201.

La force de rappel élastique du ressort 147 sollicitant la poignée 146 vers sa position basse sera avantageusement prédéterminée de manière qu'en procédant de la sorte pour extraire la console 1 de la glissière 10, l'usager fasse passer automatiquement sous l'effet de la masse de cette console 1 (et sans même sans rendre compte) cette poignée 146 dans sa position haute autorisant l'extraction de la console 1.

Bien entendu, la présente invention ne se limite pas aux formes de réalisation décrites et représentées, mais englobe également toutes les variantes d'exécution à la portée de l'homme du métier.

## Revendications

1. Ensemble coulissant pour habitacle de véhicule automobile comportant :
- une glissière (10) profilée à section en U destinée à être solidarisée au plancher (2) dudit véhicule et comprenant une base horizontale (11) et deux ailes latérales (12, 13) dotées à leurs extrémités libres de deux rebords internes respectifs (14, 15) en regard l'un de l'autre, et
- une console (1) prévue pour être montée à coulissement de manière amovible sur ladite glissière (10) ;
- ladite console (1) comportant en outre un dispositif de verrouillage (120) comprenant deux mors (136, 137) montés pivotants autour d'un même axe longitudinal (A) et aptes à être déplacés par des moyens de commande (130, 140) entre une position écartée et une position rapprochée dans laquelle ils sont contenus entre lesdits rebords internes (14, 15) de sorte à ne pas interférer avec ladite glissière (10) lors de la mise en place de la dite console (1) sur cette glissière (10) ou lors de son extraction, **caractérisé en ce que** dans leur position écartée les mors ont leurs extrémités inférieures en forme de bec (138, 139) les dits mors étant respectivement en prise avec les faces inférieures des deux rebords internes (14, 15) de ladite glissière (10).

2. Ensemble coulissant selon la revendication 1, **caractérisé en ce que** lesdits moyens de commande comportent des premiers moyens de rappel élastiques (140) sollicitant en permanence lesdits mors (136, 137) vers ladite position rapprochée, ainsi qu'une came (130) montée coulissante selon une pente longitudinale inclinée au travers d'un corps creux (121), ladite came présentant une face inférieure sensiblement horizontale en appui sur les extrémités supérieures desdits mors (136, 137) et dont la hauteur varie en fonction de la position longitudinale de ladite came (130) de sorte à entrainer une modification de l'écartement angulaire entre lesdits mors (136, 137).

3. Ensemble coulissant selon la revendication 2, **caractérisé en ce que** ladite console (1) comporte une poignée d'actionnement (146) reliée à ladite came (130) et pouvant être soulevée à pivotement par un usager depuis une position basse dans laquelle ladite came (130) occupe une position reculée basse où elle contraint lesdits mors (136, 137) dans leur position écartée à l'encontre desdits premiers moyens de rappel élastiques (140), et vers une position haute dans laquelle ladite came (130) vient occuper une position avancée haute où elle ne contraint plus lesdits mors (136, 137) qui sont donc amenés par lesdits premiers moyens de rappel élastiques (140) dans leur position rapprochée.

4. Ensemble coulissant selon la revendication 3, **caractérisé en ce que** ladite poignée (146) est systématiquement rappelée vers la position basse par des deuxièmes moyens de rappel élastiques (147).

5. Ensemble coulissant selon la revendication 4, **caractérisé en ce que** ledit dispositif de verrouillage (120) comporte un organe de blocage (160) monté pivotant autour d'un deuxième axe longitudinal (D), ainsi que des troisièmes moyens de rappel élastiques (163) aptes à entrainer, lors du soulèvement à pivotement de ladite poignée (146) en position haute, ledit organe de blocage (160) vers une position dans laquelle il forme une butée pour l'extrémité arrière de ladite tirette de sorte à empêcher le retour automatique desdits mors (136, 137) en position écartée et celui de la poignée (146) en position basse dès que cette dernière est relâchée.

6. Ensemble coulissant selon la revendication 5, **caractérisé en ce que** ledit organe de blocage (160) est agencé de sorte à être contraint, lors de la mise en place de ladite console (1) sur ladite glissière (10), par l'une des ailes latérales (12, 13) de cette glissière (10) de pivoter à l'encontre desdits troisièmes moyens de rappel élastiques (163) afin d'entrainer le retour automatique desdits mors (136, 137) en position écartée et celui de ladite poignée (146) en position basse.

7. Ensemble coulissant selon l'une des revendications 3 à 6, **caractérisé en ce que** ladite console (1) comporte au moins une empreinte de préhension (201) ménagée à l'opposée de la dite poignée (146) de sorte à permettre à un usager de soulever ladite console (1) en insérant une première main dans ladite poignée (146) et la seconde dans ladite empreinte (201).

8. Ensemble coulissant selon l'une des revendications précédentes, **caractérisé en ce que** ladite glissière (10) présente une pluralité de fenêtres (22) ménagées le long d'au moins l'une de ses deux ailes latérales (12, 13), et **en ce que** ledit dispositif de verrouillage (120) comporte également un balancier (150) monté pivotant autour d'un troisième axe longitudinal (C) et muni d'un crochet (151) à son extrémité inférieure, ledit balancier (150) étant apte à être déplacé entre une position saillante dans laquelle ledit crochet (151) traverse l'une des dites fenêtres (22) de sorte à verrouiller longitudinalement ladite console (1) sur ladite glissière (10), et une position effacée dans laquelle ledit crochet (150) est contenu entre lesdits rebords internes (14, 15) de sorte à ne pas interagir avec ladite glissière (10).

9. Ensemble coulissant selon les revendications 3 et 8, **caractérisé en ce que** ledit balancier (150) est en outre sollicité en permanence vers ladite position saillante par des quatrièmes moyens de rappel élastiques (154), et **en ce que** ladite came (130) est prolongée à son extrémité arrière par une tirette (156) agencée de sorte à contraindre ledit balancier (150) à se déplacer à l'encontre desdits quatrièmes moyens de rappel élastiques (154) vers ladite position effacée lorsque ladite poignée (146) est soulevée à pivotement dans sa position haute.

10. Ensemble coulissant selon l'une des revendications précédentes, **caractérisée en ce que** ladite console (1) comporte en outre au moins un rail de guidage (104, 105) destiné à s'insérer avec un faible jeu entre lesdites ailes latérales (12, 13) de la glissière (10).

## Patentansprüche

1. Gleitbaugruppe für die Fahrgastzelle eines Kraftfahrzeugs mit :
- eine Profilschiene (10) mit U-förmigem Querschnitt, die dazu bestimmt ist, am Boden (2) des Fahrzeugs befestigt zu werden, und die eine horizontale Basis (11) und zwei Seitenflügel (12, 13) aufweist, die an ihren freien Enden jeweils mit zwei einander gegenüberliegenden Innenflanschen (14, 15) versehen sind, und
- eine Halterung (1), die so ausgelegt ist, dass sie abnehmbar gleitend auf dem Schieber (10) montiert werden kann;
- wobei die Konsole (1) außerdem eine Verriegelungsvorrichtung (120) mit zwei Backen (136, 137) aufweist, die um dieselbe Längsachse (A) schwenkbar montiert sind und durch Steuermittel (130, 140) zwischen einer gespreizten Stellung und einer geschlossenen Stellung, in der sie zwischen den Innenflanschen (14) eingeschlossen sind, verschoben werden können, 15), um nicht mit dem Schlitten (10) zu interferieren, wenn der Bügel (1) auf diesen Schlitten (10) aufgesetzt oder herausgezogen wird, **dadurch gekennzeichnet, dass** die Backen in ihrer getrennten Position ihre unteren Enden in Form von Schnäbeln (138, 139) haben, wobei die Backen jeweils mit den unteren Flächen der beiden Innenflanschen (14, 15) des Schlittens (10) in Eingriff stehen.

2. Gleitbaugruppe nach Anspruch 1, **dadurch gekennzeichnet, dass** die Steuermittel erste elastische Rückstellmittel (140) umfassen, die die Backen (136, 137) permanent in die Schließstellung drängen, sowie einen Nocken (130), der so montiert ist, dass er entlang einer geneigten Längsschräge durch einen Hohlkörper (121) gleitet, wobei der Nocken eine im Wesentlichen horizontale Unterseite aufweist, die auf den oberen Enden der Backen (136, 137) aufliegt und deren Höhe in Abhängigkeit von der Längsposition des Nockens (130) variiert, so dass eine Änderung des Winkelabstands zwischen den Backen (136, 137) bewirkt wird.

3. Schiebeanordnung nach Anspruch 2, **dadurch gekennzeichnet, dass** der Träger (1) einen Betätigungsgriff (146) umfasst, der mit dem Nocken (130) verbunden ist und von einem Benutzer aus einer abgesenkten Position, in der der Nocken (130) eine abgesenkte zurückgezogene Position einnimmt, in der er die Backen (136) einspannt, schwenkbar angehoben werden kann, 137) in ihrer gespreizten Position gegen das erste elastische Rückstellmittel (140) und zu einer hohen Position, in der der Nocken (130) eine hoch vorgeschobene Position einnimmt, in der er die Backen (136, 137) nicht mehr zwingt, die so durch das erste elastische Rückstellmittel (140) in ihre geschlossene Position gebracht werden.

4. Schiebevorrichtung nach Anspruch 3, **dadurch gekennzeichnet, dass** der genannte Griff (146) durch ein zweites elastisches Rückstellmittel (147) systematisch in die untere Position zurückgestellt wird.

5. Schiebevorrichtung nach Anspruch 4, **dadurch gekennzeichnet, dass** die Verriegelungsvorrichtung (120) ein um eine zweite Längsachse (D) schwenkbar montiertes Blockierelement (160) sowie ein drittes elastisches Rückholmittel (163) umfasst, das den Griff (146) in die obere Position mitnehmen kann, wenn er nach oben geschwenkt wird, das Verriegelungselement (160) in eine Position, in der es einen Anschlag für das hintere Ende der Zuglasche bildet, so dass die automatische Rückkehr der Backen (136, 137) in die gespreizte Position und die des Griffs (146) in die untere Position verhindert wird, sobald dieser freigegeben wird.

6. Schiebevorrichtung nach Anspruch 5, **dadurch gekennzeichnet, dass** das Verriegelungselement (160) so angeordnet ist, dass es, wenn die Konsole (1) auf dem Schieber (10) angebracht wird, durch einen der seitlichen Flügel (12, 13) dieses Schiebers (10) gezwungen wird, gegen das dritte elastische Rückstellmittel (163) zu schwenken, um die automatische Rückstellung der Backen (136, 137) in die gespreizte Position und die des Griffs (146) in die untere Position zu bewirken.

7. Schiebevorrichtung nach einem der Ansprüche 3 bis 6, **dadurch gekennzeichnet, dass** die Konsole (1) mindestens einen Griffabdruck (201) aufweist, der gegenüber dem Griff (146) vorgesehen ist, um es einem Benutzer zu ermöglichen, die Konsole (1) durch Einführen einer ersten Hand in den Griff (146) und der zweiten Hand in den Abdruck (201) anzuheben.

8. Schiebevorrichtung nach einem der vorhergehenden Ansprüche, **dadurch gekennzeichnet, dass** der Schieber (10) eine Vielzahl von Fenstern (22) aufweist, die entlang mindestens eines seiner beiden Seitenflügel (12, 13) vorgesehen sind, und dass die Verriegelungsvorrichtung (120) auch eine Schwinge (150) umfasst, die um eine dritte Längsachse (C) schwenkbar montiert und an ihrem unteren Ende mit einem Haken (151) versehen ist, wobei das Pendel (150) zwischen einer hervorstehenden Position, in der der Haken (151) durch eines der Fenster (22) hindurchgeht, um den Bügel (1) in Längsrichtung an dem Schieber (10) zu verriegeln, und einer zurückgezogenen Position, in der der Haken (150) zwischen den Innenflanschen (14, 15) enthalten ist, um nicht mit dem Schieber (10) zusammenzuwirken, bewegbar ist.

9. Gleitbaugruppe nach den Ansprüchen 3 und 8, **dadurch gekennzeichnet, daß** der Kipphebel (150) ferner durch ein viertes elastisches Rückholmittel (154) permanent in Richtung auf die vorstehende Position gedrängt wird, und daß der Nocken (130) an seinem hinteren Ende durch eine Zuglasche (156) verlängert wird, die so angeordnet ist, daß sie den Kipphebel (150) zwingt, sich gegen das vierte elastische Rückholmittel (154) in Richtung auf die zurückgezogene Position zu bewegen, wenn der Griff (146) schwenkbar in seine angehobene Position angehoben wird.

10. Schiebevorrichtung nach einem der vorstehenden Ansprüche, **dadurch gekennzeichnet, dass** die Konsole (1) außerdem mindestens eine Führungsschiene (104, 105) aufweist, die dazu bestimmt ist, mit geringem Spiel zwischen die seitlichen Flügel (12, 13) des Schiebers (10) eingeführt zu werden.

## Claims

1. A sliding assembly for the passenger compartment of a motor vehicle comprising :
- a U-shaped profiled slide (10) intended to be secured to the floor (2) of said vehicle and comprising a horizontal base (11) and two lateral wings (12, 13) provided at their free ends with two respective internal flanges (14, 15) facing each other, and
- a console (1) designed to be slidably and removably mounted on said slide (10);
- said console (1) further comprising a locking device (120) comprising two jaws (136, 137) mounted so as to pivot about the same longitudinal axis (A) and capable of being moved by control means (130, 140) between a spread position and a close position in which they are contained between said internal flanges (14), 15) so as not to interfere with the said slide (10) when the said bracket (1) is placed on this slide (10) or when it is extracted, **characterised in that** in their separated position the jaws have their lower ends in the form of beaks (138, 139), the said jaws being respectively in engagement with the lower faces of the two internal flanges (14, 15) of the said slide (10).

2. Sliding assembly according to claim 1, **characterised in that** said control means comprise first elastic return means (140) permanently urging said jaws (136, 137) towards said close position, as well as a cam (130) mounted so as to slide along an inclined longitudinal slope through a hollow body (121), said cam having a substantially horizontal lower face bearing on the upper ends of said jaws (136, 137) and whose height varies as a function of the longitudinal position of said cam (130) so as to cause a change in the angular spacing between said jaws (136, 137).

3. A sliding assembly according to claim 2, **characterised in that** said bracket (1) comprises an actuating handle (146) connected to said cam (130) and capable of being pivotally lifted by a user from a lowered position in which said cam (130) occupies a lowered retracted position where it constrains said jaws (136), 137) in their spread position against said first elastic return means (140), and towards a high position in which said cam (130) comes to occupy a high advanced position where it no longer constrains said jaws (136, 137) which are therefore brought by said first elastic return means (140) into their close position.

4. Sliding assembly according to claim 3, **characterised in that** said handle (146) is systematically returned to the lowered position by second elastic return means (147).

5. Sliding assembly according to claim 4, **characterised in that** said locking device (120) comprises a blocking member (160) mounted so as to pivot about a second longitudinal axis (D), as well as third elastic return means (163) capable of driving said handle (146) into the upper position when it is raised in a pivoting manner, said locking member (160) to a position in which it forms a stop for the rear end of said pull tab so as to prevent the automatic return of said jaws (136, 137) to the spread position and that of the handle (146) to the lowered position as soon as the latter is released.

6. Sliding assembly according to claim 5, **characterised in that** said locking member (160) is arranged so as to be constrained, when said console (1) is placed on said slide (10), by one of the lateral wings (12, 13) of this slide (10) to pivot against said third elastic return means (163) in order to cause the automatic return of said jaws (136, 137) to the spread position and that of said handle (146) to the lowered position.

7. A sliding assembly according to one of claims 3 to 6, **characterised in that** said console (1) comprises at least one gripping imprint (201) provided opposite said handle (146) so as to enable a user to lift said console (1) by inserting a first hand into said handle (146) and the second into said imprint (201).

8. Sliding assembly according to one of the preceding claims, **characterised in that** the said slide (10) has a plurality of windows (22) provided along at least one of its two lateral wings (12, 13), and **in that** the said locking device (120) also includes a rocker (150) mounted so as to pivot about a third longitudinal axis (C) and provided with a hook (151) at its lower end, said pendulum (150) being able to be moved between a protruding position in which said hook (151) passes through one of said windows (22) so as to longitudinally lock said bracket (1) to said slider (10), and a retracted position in which said hook (150) is contained between said internal flanges (14, 15) so as not to interact with said slider (10).

9. A sliding assembly according to claims 3 and 8, **characterised in that** said rocker arm (150) is further permanently biased towards said projecting position by fourth resilient return means (154), and **in that** said cam (130) is extended at its rear end by a pull tab (156) arranged to force said rocker arm (150) to move against said fourth resilient return means (154) to said retracted position when said handle (146) is pivotally raised to its raised position.

10. Sliding assembly according to one of the preceding claims, **characterised in that** said console (1) further comprises at least one guide rail (104, 105) intended to be inserted with a small clearance between said lateral wings (12, 13) of the slide (10).
